# EUROPEAN PATENT APPLICATION

(11) **EP 4 063 776 A1**
(43) Date of publication of application: **28.09.2022**
(21) Application number: 22160735.1
(22) Date of filing: 08.03.2022
(51) Int. Cl.: F27B 9/36, F27D 99/00

(54) **ROLLER KILN FOR CERAMIC PRODUCTS USING HYDROGEN IN THE COMBUSTION SYSTEM**

(30) Priority: 22.03.2021 IT 202100006797
(71) Applicant: Italforni - Societa'a Responsabilita'Limitata, 41043 FORMIGINE (MO) (IT)
(72) Inventor: MAZZACANI, Filippo, 42014 CASTELLARANO (RE) (IT); MAZZACANI, Gabriele, 42014 CASTELLARANO (RE) (IT)
(74) Representative: Corradini, Corrado

(57) **Abstract**

A kiln (100) for ceramic products is described, comprising: an outer casing (105) defining a channel (130) which mainly extends along a predetermined length direction (A), a plurality of rollers (145) placed inside the channel (130) to define a support surface for ceramic products and to let them advance along said length direction (A), and a plurality of burners (170) adapted to heat the inside of the channel (130), wherein each burner (170) comprises: a combustion chamber (180) placed in communication with the inside of the channel (130), a first inlet (190) for a gas fuel containing hydrocarbons and adapted to be burnt in the combustion chamber (180), and a second inlet (195) for an oxidising gas, such as air, adapted to allow the combustion of the gas fuel in the combustion chamber (180), and wherein the kiln (100) further comprises: at least a hydrogen source (500) adapted to supply a gas fuel containing hydrogen, and a system (600) for conveying hydrogen adapted to convey said gas fuel containing hydrogen into the combustion chamber (180) of each burner (170) to be burnt.

## Description

### Technical Field

The present invention relates to roller kilns used for firing ceramic products, typically tiles and/or the ceramic slabs. More particularly, the present invention relates to burners that are commonly used to heat the aforesaid kilns to the temperatures necessary for their operation.

### Background

It is well known that roller kilns for ceramic products generally comprise an outer casing of a substantially tubular shape, although usually of squared section, which defines in its inside a channel which mainly extends along a predetermined length direction, starting from an inlet end towards an outlet end.

The surfaces of the outer casing facing and delimiting the inside channel are covered with refractory materials, e.g bricks and/or refractory slabs, fibres and/or insulating mortars, which are able to withstand the high temperatures present in the kiln.

The kiln also comprises a multiplicity of rollers, made of ceramic or other materials resistant to high temperatures (e.g. metal, special steels or silicon carbide), which are placed inside the outer casing, where they are arranged side by side, with the respective axes oriented coplanar, parallel and orthogonal to the length direction of the channel, so as to define a roller conveyor that makes a support surface available for ceramic products.

This roller conveyor preferably extends over the entire length of the channel from the inlet end to the outlet end.

The rollers that make up the roller conveyor can be rotatably supported by the side walls of the kiln and can partially protrude outside it to be connected to a handling system that allows them to rotate on themselves.

In this way, the rollers of the roller conveyor, in addition to supporting the ceramic products inside the kiln, are also able to let them advance in succession from the inlet end to the outlet end.

During this advancement, the ceramic products undergo a succession of firing process steps, including, for example, a pre-heating step, a pre-firing step, a firing step, and a cooling step, each of which is carried out in a corresponding zone of the kiln, i.e., in a corresponding portion or longitudinal segment of the outer casing.

In order to raise and maintain the internal temperature of the kiln to the values necessary to carry out these steps, in particular the firing step, the kiln is equipped with a plurality of burners, which can be applied on both side walls of the outer casing, generally subdivided into two arrays, of which a first array of burners placed below the roller conveyor and a second array of burners placed above.

Each burner normally comprises a flame tube, typically made of silicon carbide and defining a combustion chamber, which is inserted into the side wall of the kiln and has an open end that flows directly and freely into the channel in which the ceramic products pass.

The opposite end of this flame tube is closed by a burner body, which protrudes outside the kiln, where it has a first inlet for a gas fuel based on hydrocarbons, e.g. methane, LPG or other, and a second inlet for an oxidising gas containing oxygen, typically air.

Through this first and second inlet, the gas fuel and the oxidising gas are conveyed independently as far as the inside of the combustion chamber, where they mix and give rise to a flame combustion.

The hot gases generated by combustion escape from the open end of the combustion chamber and diffuse into the internal channel of the kiln, raising its temperature mainly by convection effect, before escaping through a special chimney.

However, the oxidising gases coming out of the chimney of these roller kilns generally also contain pollutants, including in particular rather significant amounts of carbon dioxide (CO₂).

Considering, by way of example, the methane combustion reaction:

*CH₄* + *2O₂→CO₂* + *2H₂O*

it is clear that the combustion products are essentially water and carbon dioxide.

Other pollutants are then produced due to the conditions under which combustion takes place.

For example, in order for the gas fuel to develop its calorific value to the maximum, it is necessary for the oxidising gas to be present in an amount at least equal to the theoretical amount expected from the combustion reaction, i.e., in an amount at least equal to the stoichiometric amount.

Therefore, except in special circumstances, there is a general tendency to operate combustion under stoichiometric conditions or even with excess of air (i.e. in an oxidising atmosphere).

Under these conditions, the nitrogen contained in the air can combine with excess oxygen and give rise to nitrogen oxides (NOₓ) which, if released into the atmosphere, can react with the moisture in the air to form acidic compounds that fall to the ground (socalled acid rains).

These problems, which have been presented with particular reference to the use of methane, also occur when other gas fuels based on hydrocarbons are used, such as the propane and butane that make up LPG.

In order to reduce polluting emissions, roller kilns for ceramic products are currently provided with sophisticated and complex systems of filtration and treatment of oxidising gases, the adoption of which, however, significantly increases the costs of the plant and, nevertheless, may not be sufficient to comply with the increasingly stringent antipollution regulations issued by Western countries.

### Disclosure of the invention

In view of the foregoing, an object of the present invention is to solve or at least mitigate the aforementioned problems of the prior art by making available a roller kiln for ceramic products which, for the same amount of heat produced by the corresponding burners, can generate a lower amount of pollutants.

It is a further object to achieve the mentioned object within the scope of a simple, rational and relatively affordable solution.

These and other objects are achieved thanks to the characteristics of the invention reported in the independent claims. The dependent claims outline preferred and/or particularly advantageous aspects of the invention but not strictly necessary for implementing it.

In particular, one embodiment of the present invention makes available a kiln for ceramic products, typically ceramic tiles and/or slabs, comprising:
- an outer casing defining a channel which mainly extends along a predetermined length direction,
- a plurality of rollers placed inside the channel, to define a support plane for ceramic products and to let them advance along said length direction, and
- a plurality of burners adapted to heat the inside of the channel, wherein each burner comprises:
   - a combustion chamber placed in communication with the inside of the channel,
   - a first inlet for a gas fuel containing hydrocarbons, e.g. methane, LPG or other, adapted to be burnt in the combustion chamber, and
   - a second inlet for an oxidising gas, such as air, adapted to allow the combustion of the gas fuel in the combustion chamber,
      and wherein this roller kiln further comprises:
   - at least one hydrogen source adapted to supply a gas fuel containing hydrogen, and
   - a system for conveying hydrogen adapted to convey said gas fuel containing hydrogen into the combustion chamber of each burner to be burnt.

Thanks to this solution, the heat produced by each burner is not only attributable to the combustion of the gas fuel but also to the hydrogen combustion.

Unlike gas fuel based on hydrocarbons, however, hydrogen combustion produces only water:

*H₂* + ½*O₂ → H₂O*

Therefore, for the same amount of heat generated, the simultaneous combustion of gas fuel and hydrogen produces a lower amount of CO₂ than conventional solutions.

In addition, the combustion of hydrogen "consumes" a high amount of oxygen which, consequently, cannot combine with the nitrogen possibly contained in the oxidising gas (typically air), thus reducing the formation of NOₓ.

According to one aspect of the invention, the gas fuel supplied by the hydrogen source can comprise (or consist of) molecular hydrogen (H₂) in a gaseous state.

Compared to other gas fuel containing hydrogen, such as HHO (of which the possibility of use in the context of the present invention is not excluded), molecular hydrogen (H₂) has a higher self-ignition temperature (of the order of 570°C) and is therefore more manageable in terms of safety.

According to another aspect of the invention, the hydrogen source may be a hydrogen generator (also called a dissociator).

For example, the hydrogen generator may be adapted to split water molecules (H₂O) into oxygen (O₂) and molecular hydrogen (H₂), the latter constituting at least part of the aforesaid combustible gas.

In this way, the proposed solution also achieves economic savings, since water is generally less expensive than gas fuel based on hydrocarbons, so the burners of the roller kiln are able to generate the same heat, but with a lower cost of raw material, compared to traditional burners.

In this context, one aspect of the invention provides that the kiln may further comprise a system for conveying hydrogen adapted to convey the oxygen obtained from said hydrogen generator to the second inlet of each burner.

Thanks to this solution, the oxidising power of the oxidising gas, typically air, is advantageously increased, so that an optimal combustion can be obtained while using a comparatively smaller amount of air than traditional solutions, which translates into a lower exhaust flow rate at the chimney.

For example, reducing the amount of air also reduces the amount of nitrogen that could give rise to nitrogen oxides NOₓ.

In addition, by increasing the percentage of oxygen in the oxidising gas, the flame temperature can be increased, thereby improving the thermal efficiency of burners. However, it is not excluded that, in other embodiments, the hydrogen source may comprise a cylinder for the storage of gas fuel containing hydrogen, which may be periodically filled and/or replaced with another similar cylinder.

In this way, the fuel containing hydrogen can be generated away from the kiln, for example in specially dedicated and generally more efficient plants, before being transported to the kiln and used to supply the burners.

According to one possible embodiment of the present invention, each burner may comprise a third inlet, which is distinct and separate from the first and second inlets and is communicating with the combustion chamber, and the hydrogen conveying system may comprise a delivery duct for each burner, which is distinct and separate from the delivery ducts of all the other burners and is connected with the third inlet of the respective burner.

Thanks to this solution, the gas fuel containing hydrogen is delivered directly into the combustion chamber of each burner and can therefore be dosed in an optimal manner, thereby increasing safety and avoiding delivery inconsistencies.

In particular, each burner may comprise:
- a tube (flame tube) adapted to delimit the combustion chamber and provided with an open axial end and flowing into the kiln channel,
- at least a first orifice placed inside the tube and connected with the first inlet for the escape of the gas fuel into the combustion chamber, and
- at least one second orifice placed inside the tube and connected with the third inlet for the escape of the hydrogen into the combustion chamber.

This aspect provides an extremely simple and reliable solution for realizing the burner. In this context, the first orifice may preferably be further away from the open end of the tube than the second orifice, along a direction parallel to the axis of the tube itself.

In this way, the hydrogen is supplied directly into the flame already produced by the combustion of the gas.

According to another preferred aspect of the invention, the distance between said first orifice and said second orifice, along a direction parallel to the axis of the tube, can be adjustable.

Fluid dynamics simulations have shown that this distance significantly influences the amount of NOx that is produced as a result of the combustion of the gas, as well as other boundary conditions, including primarily gas, air and hydrogen flow rates. Therefore, adjusting the distance between the first and second orifices advantageously allows the burner to be used with different gas, air and hydrogen flow rates, without significantly increasing the polluting emissions of the burner.

Depending on the other boundary conditions, this adjustment also allows to maintain the point of ignition of the hydrogen combustion, which notoriously develops very high temperatures, at a safe distance from other components of the burner that might otherwise be damaged.

To allow such adjustment, one embodiment provides that said first orifice and said second orifice can be made in a delivery head that is replaceable with one or more other (analogous) delivery heads having the first and second orifices at different distances.

In this way, the adjustment can be achieved by simply replacing a component. Alternatively, said first orifice may be made in a delivery head and said second orifice may be made in a conveying tube slidably associated with the delivery head.

In this way it is advantageously possible to adjust the distance between the orifices without replacing components, achieving the possibility of a continuous and possibly "dynamic" adjustment during operation.

According to an alternative embodiment, the first inlet of each burner may be linked to a supply duct of the gas fuel, which is distinct and separate from the supply ducts of the gas fuel of all the other burners, and the hydrogen conveying system may comprise a delivery duct for each burner, which is distinct and separate from the delivery ducts of all the other burners and flows into the supply duct of the gas fuel of the corresponding burner.

Thanks to this solution, the gas fuel containing hydrogen is pre-mixed with the gas fuel, entering inside each burner together with it.

Thus, it is possible to achieve the invention by simply using/adapting substantially conventional burners that do not have a dedicated inlet for hydrogen.

In this context, it is provided that each supply duct of the gas fuel may be provided with at least a valve and that each delivery duct may flow into the corresponding supply duct of the gas fuel downstream of said valve, relative to the outflow direction of the gas fuel towards the burner.

In this way, the gas fuel flow and the gas fuel containing hydrogen flow can be managed and adjusted independently of each other.

An alternative embodiment of the present invention provides that the second inlet of each burner may be linked to a supply duct of the oxidising gas, which is distinct and separate from the supply ducts of the oxidising gas of all the other burners, and that the hydrogen conveying system may comprise a delivery duct for each burner, which is distinct and separate from the delivery ducts of all the other burners and flows into the supply duct of the oxidising gas of the corresponding burner.

Thanks to this solution, the gas fuel containing hydrogen is pre-mixed with the oxidising gas (air), entering together with it inside each burner.

Thus, it is again possible to achieve the invention by simply using/adapting substantially conventional burners that do not have a dedicated hydrogen inlet.

In this context, it is provided that each supply duct of the oxidising gas may be provided with at least a valve and that each delivery duct may flow into the corresponding supply duct of the oxidising gas downstream of said valve, relative to the outflow direction of the oxidising gas towards the burner.

In this way, the flow of oxidising gas and the flow of gas fuel containing hydrogen can be managed and adjusted independently of each other.

According to an alternative embodiment of the present invention, the hydrogen conveying system could further comprise at least a delivery duct flowing into a supply duct of the gas fuel, which is linked to the first inlet of two or more burners through a distribution network.

For example, the conveying system could comprise a single delivery duct that flows into the primary duct that conveys the gas fuel towards the first inlets of all burners in the kiln, or it could comprise a plurality of delivery ducts, each of which flows into a branch duct that connects said primary duct with a manifold (or gas ring) adapted to supply a subgroup of burners, for example those present in the same adjustment zone.

Thanks to these solutions, it is advantageously possible to supply each burner with a mixture of gas fuel and hydrogen, while reducing the plant engineering complexity of the conveying system.

Conversely, because they have very different specific weight, the hydrogen and gas fuel could be divided along the ductwork, causing the mixture not to be always uniformly distributed to all the burners.

According to another aspect of the invention, each delivery duct of the gas fuel containing hydrogen may still be provided with a flowmeter and/or a valve.

The presence of these devices allows an effective adjustment of the amount of hydrogen delivered to the burners.

### Brief description of the drawings

Further features and advantages of the invention will be more apparent after reading the following description provided by way of non-limiting example, with the aid of the accompanying drawings.
Figure 1 is a side view of a roller kiln for ceramic tiles and/or slabs according to an embodiment of the present invention.
Figure 2 is the section II-II indicated in Figure 1 shown in an enlarged scale.
Figure 3 is a detail of Figure 2 that shows schematically and merely by way of example the cutaway of a burner.
Figure 4 is a schematic representation of a longitudinal segment of the kiln of Figure 1 at the firing zone, according to a first embodiment of the invention.
Figure 5 shows the diagram of the supply system of a burner in accordance with a possible embodiment of the diagram of Figure 4.
Figure 6 shows the diagram of the supply system of a burner in accordance with a different embodiment of the diagram of Figure 4.
Figure 7 shows the diagram of the supply system of a burner in accordance with a possible third embodiment of the diagram of Figure 4.
Figure 8 is a schematic representation of a longitudinal segment of the kiln of Figure 1 at the firing zone, according to an alternative embodiment of the invention.
Figure 9 is a schematic representation of a longitudinal segment of the kiln of Figure 1 at the firing zone, according to a third embodiment of the invention.
Figures 10 and 11 schematically show two embodiments for a burner conforming to the diagram of Figure 5.

### Detailed description

From the mentioned figures, a roller kiln 100 for ceramic tiles and/or slabs is disclosed. However, it is not excluded that the roller kiln 100 may be used for other ceramic products, such as porcelain products or other ceramic products.

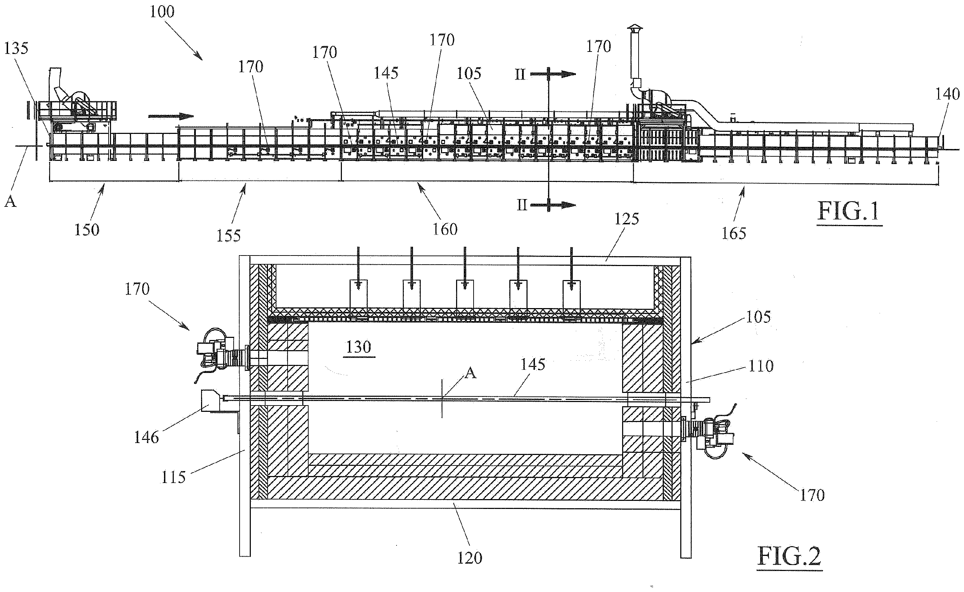

The kiln 100 generally comprises an outer casing 105 of substantially tubular shape, which can have a square cross-section, for example rectangular (s. Fig.2).

In particular, the outer casing 105 may comprise two vertical and mutually opposed side walls 110 and 115, a horizontal bottom wall (or slab) 120, and an upper horizontal wall (or vault) 125 opposed to the bottom wall 120.

In this way, the outer casing 105 defines internally an elongated channel 130 which mainly extends along a predetermined, generally straight length direction A starting from an inlet end 135 towards an outlet end 140.

The surfaces of the outer casing 105 facing and delimiting the channel 130 are covered with one or more layers of refractory materials, e.g., refractory bricks and/or slabs, fibres and/or insulating mortars.

For example, the bottom wall (slab) 120 may be internally covered with refractory bricks and insulating refractory mortars, while the side walls 110, 115 and the upper wall (vault) 125 may be coated with refractory slabs and/or insulating fibre mat module.

A multiplicity of rollers 145 are installed inside the channel 130, whose axes are mutually coplanar, parallel and are oriented perpendicular to the length direction A, for example lying close together on the same horizontal plane.

In particular, the rollers 145 are located at an elevation such that they are spaced apart from both the bottom wall 120 and the upper wall 125, e.g., substantially equidistant therefrom.

In this way, the rollers 145 globally define a roller conveyor adapted to provide a support plane for the tiles and/or the ceramic slabs inside the kiln 100.

This roller conveyor preferably extends over the entire length of the channel 130 from the inlet end 135 to the outlet end 140.

As illustrated in Figure 2, each roller 145 may be rotatably supported by the side walls 110 and 115 of the outer housing 105, extending transversely through the channel 130. In other words, the opposite ends of each roller 145 may be rotatably inserted into a hole made in the side wall 110 and the side wall 115, respectively, and passing, evidently, also through the respective layers of insulating material.

At least one, or more preferably both, of the aforesaid ends may protrude outside the outer casing 105.

One of these protruding ends can then be connected to a suitable handling system 146 that actively drives each roller 145 to rotate about itself about its central axis.

This handling system 146 may comprise, for example, a gear drive system that transfers motion from one or more electric motors (not illustrated) to the rollers 145.

In any case, thanks to the handling system 146 the rollers 145 of the roller conveyor are able, not only to support the tiles and/or the ceramic slabs within the channel 130, but also to let them advance in succession from the inlet end 135 towards the outlet end 140, along a direction of advancement parallel to the longitudinal axis A.

In order to withstand the temperatures inside the kiln 100, the rollers 145 may be made of ceramic or other materials (e.g., metal, special steels, or silicon carbide).

The outer casing 105 of the kiln 100 may be subdivided into a plurality of longitudinal portions or segments, referred to as zones, wherein each longitudinal portion or segment is defined by a tubular-shaped section having a smaller longitudinal extent than the overall longitudinal extent of the outer casing 105.

These zones are arranged in succession along the direction defined by the longitudinal axis A, so that the tiles and/or the ceramic slabs passing from the inlet 135 towards the outlet 140 are forced to cross them all, one after the other.

In each of these zones, the ceramic tiles and/or the slabs are subjected to a different step of the firing process, which may correspond to different temperature values and/or different dwell times of the ceramic tiles and/or slabs at those temperatures.

For example, from the inlet 135 to the outlet 140, the kiln 100 comprise a preheating zone 150, a pre-firing zone 155, a firing zone 160, and a cooling zone 165.

In order to raise and maintain the temperature of the kiln 100 to the expected values, the latter is provided with a multiplicity of burners 170, which may be located at the pre-firing zone 155 and mainly in the firing zone 160.

In particular, the burners 170 may be applied to the side walls 110 and/or 115 of the outer casing 105.

For example, the kiln 100 may be provided with a first group of burners 170 applied to the side wall 110 and a second group of burners 170 applied to the opposite side wall 115.

Each of these first and second groups, or in general the set of burners 170, may then be subdivided into an array of burners 170 positioned above the roller conveyor and/or an array of burners 170 positioned below it.

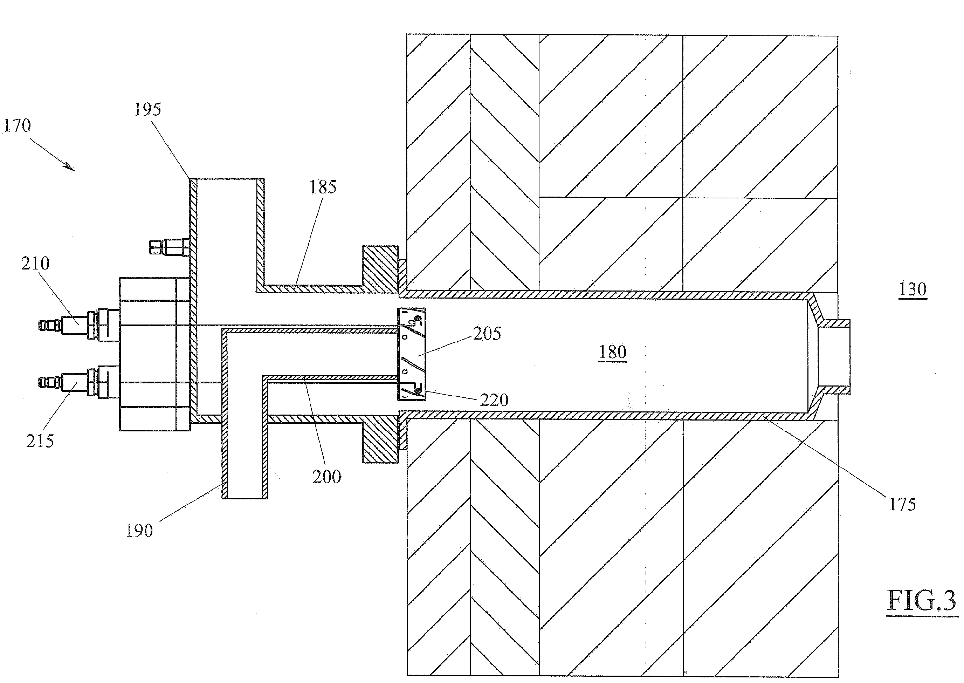

As illustrated in Figure 3, each burner 170 normally comprises a tube 175, usually referred to as a "flame tube", which is inserted into a through opening made in the corresponding side wall 110 or 115 and in the relative covering layers, where it is generally oriented with an axis orthogonal to the length direction A of the kiln 100, for example parallel to the axis of the rollers 145.

This flame tube 175 is adapted to delimit in its inside a combustion chamber 180 and, having to withstand high thermal stresses, can be made of silicon carbide.

The flame tube 175 has an open axial end that flows directly and freely into the channel 130 through which the tiles and/or the ceramic slabs pass.

The opposite end of this flame tube 175 is connected to a body 185 of the burner 170, which remains located outside the outer casing 105 of the kiln 100, and can have a fixing flange with which it is secured thereto.

This body 185 may also be internally hollow, having an open axial end, communicating with the flame tube 175, and an opposite closed axial end.

The body 185 is generally not affected by the combustion and may be made of metallic material (e.g., steel, aluminium, or cast iron).

The body 185 of each burner 170 may be provided with a first inlet 190 for a gas fuel containing hydrocarbons and a second inlet 195 for a oxidising gas containing oxygen. The gas fuel may comprise or consist, for example, of methane gas, LPG or other gases or mixtures of fossil fuel gases, while the oxidising gas may comprise or consist of air.

Hereinafter, the gas fuel containing hydrocarbons will be referred to for the sake of brevity as "gas", while the oxidising gas containing oxygen will be referred to for the sake of brevity as "air", without necessarily wanting to give these terms a limiting meaning. Both of the aforesaid first and second inlets 190 and 195 are in communication with the combustion chamber 180.

In particular, the first inlet 190 may be connected with a sleeve 200, which has a first end engaged with the first inlet 190 and which, extending within the body 185, carries its second end near or within the combustion chamber 180, where it may be connected to a delivery head 205.

At least the portion of the sleeve 200 carrying the delivery head 205 may be coaxial with the flame tube 175 or, in any case, these two components may have parallel axes.

In this way, the gas coming from the first inlet 190 is forced to follow the sleeve 200, to be delivered directly into the combustion chamber 180.

Instead, the second inlet 195 may flow directly into the internal cavity of the body 185, externally with respect to the sleeve 200.

In this way, the air coming from the second inlet 195 can flow in the interspace included between the internal surface of the body 185 and the outer surface of the sleeve 200, remaining separated from the gas and mixing with the latter only inside the combustion chamber 180, at the delivery head 205.

To improve the diffusion of air, the delivery head 205 (also called nozzle or core) can be coaxially surrounded by a diffuser 220 (also called rosette or crown), substantially having a discoidal shape, which occupies at least partially the interspace in which the air flows and is provided with a plurality of blades that are adapted to imprint a predetermined, generally swirling motion on the air.

Each burner 170 may further comprise two electric spark plugs, one of which is an ignition spark plug 210 and a detection spark plug 215.

Both of these spark plugs 210 and 215 may be fixed to the body 185 and, extending within the latter, may carry an operating electrode within the combustion chamber 180, preferably at the delivery head 205.

When electrically powered, the ignition spark plug 210 is adapted to create an electric arc at its operating electrode, which can therefore trigger the combustion of the gas and air mixture in the combustion chamber 180.

This combustion produces a flame, which strikes the operating electrode of the detection spark plug 215 which then generates an electrical signal in response to the ionization produced by the flame.

Depending on whether this electrical signal is generated or not, the detection spark plug 215 is therefore able to detect whether the flame is on or off and therefore whether the combustion is in progress or not.

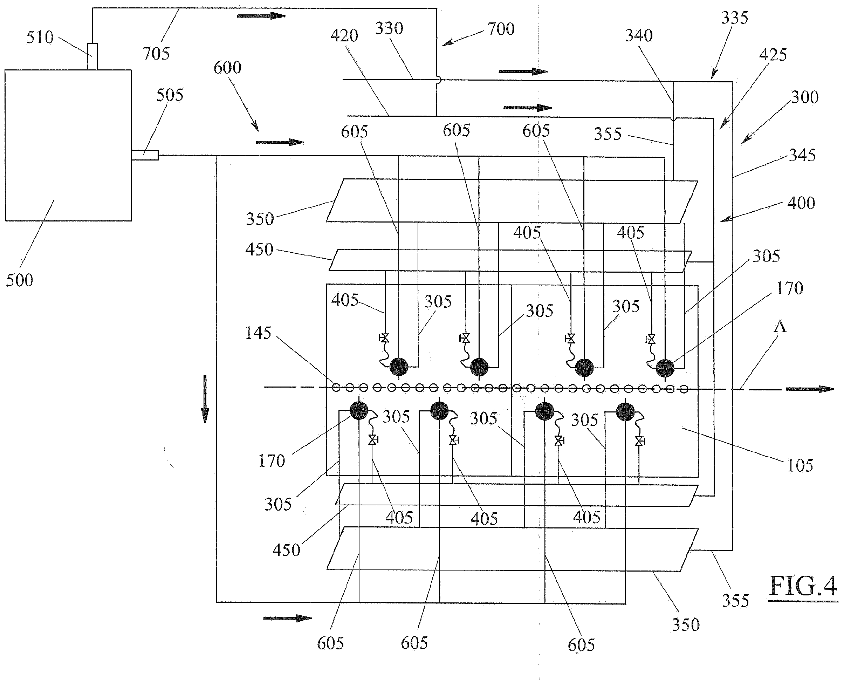

As illustrated schematically in Figure 4, to enable operation of the burners 170, the kiln 100 comprises a gas conveying system 300 and an air conveying system 400.

First of all, the conveying system 300 comprises a plurality of supply ducts 305, each of which is in communication with the first inlet 190 of a corresponding burner 170, remaining distinct and separate from the supply ducts 305 of all the other burners 170.

In other words, the first inlet 190 of each burner 170 is directly and uniquely connected with a respective supply duct 305 of the conveying system 300, so that the gas flowing within this supply duct 305 can only reach the corresponding burner 170 and no other.

As illustrated in Figures from 5 to 7, each supply duct 305 may be provided with a valve group 310 comprising one or more valves adapted to intercept the gas flow, i.e., adapted to close and/or partialise the passage section of the supply duct 305.

In particular, the valve group 310 may comprise a shut-off valve 315, for example manually operated.

The valve group 310 may further comprise at least a first safety solenoid valve 320, which may be positioned downstream of the shut-off valves 315 with respect to the direction of normal outflow of the gas towards the first inlet 190 of the burner 170.

More preferably, the valve group 310 may also comprise a second safety solenoid valve 325, which may be positioned downstream of the first safety solenoid valve 320 with respect to the direction of normal outflow of the gas towards the first inlet 190 of the burner 170.

Returning to the conveying system 300, the same can also comprise at least one primary gas supply duct 330 and a distribution network 335 adapted to connect said primary duct 330 with all the supply ducts 305 of the single burners 170, so as to distribute towards the latter the gas coming from the primary duct 330.

This distribution network 335 may comprise one or more secondary ducts, including for example a first secondary duct 340 which may be adapted to connect the primary duct 330 with the supply ducts 305 of the burners 170 installed above the roller conveyor, and a second secondary duct 345 which may be adapted to connect the primary duct 330 with the supply ducts 305 of the burners 170 installed below the roller conveyor. The distribution network 335 may further comprise one or more manifolds (or gas rings) 350, each of which is connected with only one of the aforesaid secondary ducts 340 or 345.

In particular, each manifold (or gas ring) 350 may be connected to the respective secondary duct 340 or 345 via a single branch duct 355, which is preferably distinct and separated from the branch ducts 355 of all the other manifolds 350.

Thus, the gas flowing from a secondary duct 340 or 345 within a branch duct 355 can only reach the corresponding manifold 350 and no other.

Each manifold 350 is finally connected with one or more supply ducts 305 of as many burners 170, for example but not necessarily with the supply ducts 305 of four burners 170.

In particular, each manifold 350 may be connected with the supply ducts 305 of a group of burners 170 that belong to the same adjustment zone.

Similarly, the air conveying system 400 first of all comprises a plurality of supply ducts 405, each of which is in communication with the second inlet 195 of a corresponding burner 170, remaining distinct and separate from the supply ducts 405 of all the other burners 170.

In other words, the second inlet 195 of each burner 170 is directly and uniquely connected with a respective supply duct 405 of the conveying system 400, so that the air flowing within this supply duct 405 can only reach the corresponding burner 170 and no other.

As illustrated in Figures from 5 to 7, each supply duct 405 may be provided with a valve group 410 comprising one or more valves adapted to intercept the air flow, i.e., to close and/or partialise the passage section of the supply duct 405.

In particular, this valve group 410 may comprise at least a shut-off valve 415, for example manually operated.

The conveying system 400 may further comprise at least one primary air supply duct 420 and a distribution network 425 adapted to connect said primary duct 420 with all supply ducts 405 of the single burners 170, so as to distribute the air coming from the primary duct 420 to the latter.

To push air into the primary duct 420, the latter may be connected with a fan 430.

The distribution network 425 may further comprise a plurality of manifolds (or air rings) 450, each of which is connected with the primary duct and one or more supply ducts 405 of as many burners 170, for example but not necessarily with the supply ducts 405 of four burners 170.

In particular, each manifold 450 may be connected with the supply ducts 405 of a group of burners 170 that belong to the same adjustment zone.

For example, but not necessarily, each air manifold 450 may be connected to a group of burners 170 that are in turn connected with a same gas manifold 350.

According to an important aspect of the invention, the kiln 100 further comprises at least one hydrogen generator 500, which is adapted to produce a gas fuel containing precisely hydrogen.

This gas fuel may comprise or consist of oxyhydrogen, which is a gaseous mixture of hydrogen and oxygen, such as HHO that can be obtained by means of an electrolytic cell in which a process of electrolytic dissociation of water occurs in substantially stoichiometric proportions.

However, more preferably the gas fuel may comprise or consist of molecular hydrogen (H₂) in the gaseous state.

Also in this case, the hydrogen generator 500 (which usually takes the name of dissociator) can be defined by an electrolyzer, or electrolytic cell, thanks to which it is possible to carry out the electrolysis of water, obtaining molecular oxygen (O₂) and hydrogen (H2).

In practice, the hydrogen can be obtained by passing electric current through water containing an electrolyte (e.g., a salt). In this way, the water molecules, due to the difference in potential provided through the electrical circuit, dissociate, and the oxygen and hydrogen atoms pass from a molecular structure (H₂O) to a diatomic structure (H₂ and O₂). The hydrogen (H₂) is produced by the cathode, i.e. the negative pole of the electrolytic cell, while the oxygen (O₂) is produced by the anode, i.e. the positive pole of the electrolytic cell.

The hydrogen generator 500 may therefore comprise a first outlet 505 for the gas fuel containing hydrogen, such as molecular hydrogen (H₂), and possibly a second outlet 510 for the molecular oxygen (O₂) which are obtained from the electrolysis process.

For the sake of simplicity, the gas fuel containing hydrogen will be referred to simply as "hydrogen" later in this discussion, without this necessarily having to be interpreted in a limiting sense.

The kiln 100 therefore comprises a conveying system 600, which is adapted to convey the hydrogen produced by the hydrogen generator 500 into the combustion chamber 180 of each burner 170 of the kiln 100 or, if two or more hydrogen generators 500 are provided, into the combustion chambers 180 of a respective subgroup of burners 170. The modes in which this conveying system 600 conveys hydrogen into the combustion chambers 180 of the various burners 170 can be many.

In general terms, a first mode provides that the hydrogen conveying system 600 can be connected with the gas conveying system 300, so as to preliminarily create a hydrogen and gas mixture that is introduced into the burners 170 through the first inlets 190.

A second mode generally provides that the hydrogen conveying system 600 may be connected with the air conveying system 400, so as to preliminarily create a hydrogen and air mixture that is introduced into the burners 170 through the second inlets 195.

A third mode generally provides that the hydrogen conveying system 600 may be connected directly with the burners 170, so that hydrogen is supplied internally without any premixing with either gas or air.

In other words, the hydrogen can be supplied directly into the combustion chamber 180 of each burner 170, in its original state, that is as obtained from the generator 500 and without having been premixed with either gas or air.

Going into greater detail, the conveying system 600 may comprise a plurality of delivery ducts 605 adapted to receive the hydrogen produced by the hydrogen generator 500, for example through a suitable distribution network connected with the first outlet 505. Each of these delivery ducts 605 may be adapted to supply hydrogen to only one respective burner 170, remaining distinct and separate from the delivery ducts 605 of all the other burners 170.

In other words, each burner 170 may be connected to a single delivery duct 605 of the conveying system 600, such that the hydrogen flowing within this delivery duct 605 may only reach the corresponding burner 170 and no other.

As illustrated in Figures from 5 to 7, each delivery duct 605 may be provided with a flowmeter 610 adapted to measure the amount of hydrogen that is supplied to the respective burner 170.

Each delivery duct 605 may also be provided with one or more valves adapted to intercept the flow of hydrogen, i.e., adapted to close and/or partialise the passage section of the delivery duct 605.

These valves can comprise a non-return valve 615, which can be placed on the delivery duct 605 upstream of the flowmeter 610 with respect to the direction of normal outflow of the hydrogen, i.e. from the hydrogen generator 500 towards the respective burner 170, and is adapted to prevent any possible reverse flow, i.e. from the respective burner 170 backwards towards the hydrogen generator 500.

The valves may further comprise at least a first safety solenoid valve 620, which may be located downstream of the flowmeter 610 with respect to the direction of normal outflow of the hydrogen.

More preferably, the valves also comprise a second safety solenoid valve 625, which may be positioned downstream of the first safety solenoid valve 620 with respect to the direction of normal outflow of the hydrogen to the burner 170.

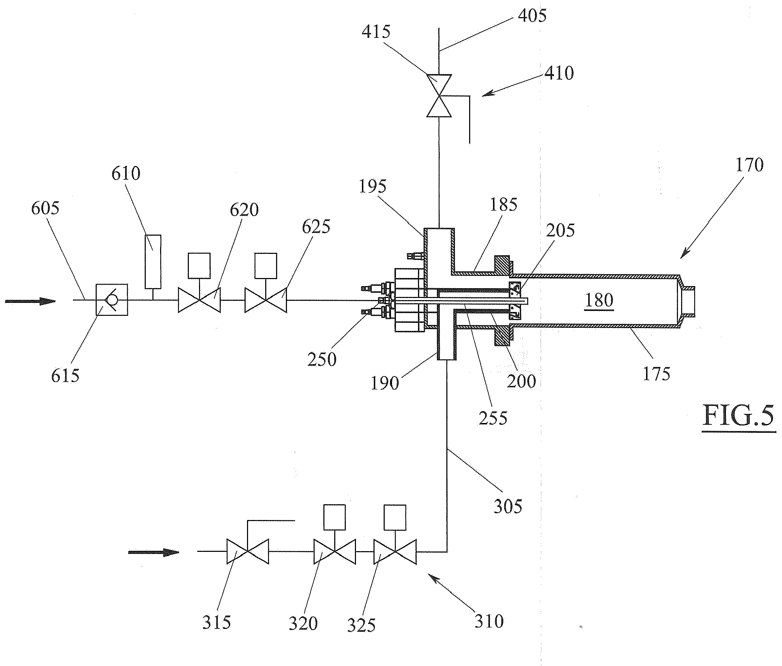

Taking advantage of these delivery ducts 605, a first embodiment of the invention, illustrated in Figure 5, provides that each burner 170 can be provided with a third inlet 250, separate and distinct from the first and second inlet 190 and 195, which is connected and is adapted to receive hydrogen only from the corresponding delivery duct 605.

This third inlet 250, which may be obtained in the body 185 of the burner 170, may in turn be connected with a conveying tube 255, which has a first end engaged with the third inlet 250 and which, extending within the body 185, leads to a second end to flow directly into the combustion chamber 180.

For example, the conveying tube 255 may extend coaxially within the sleeve 200, bringing the second end at the delivery head 205.

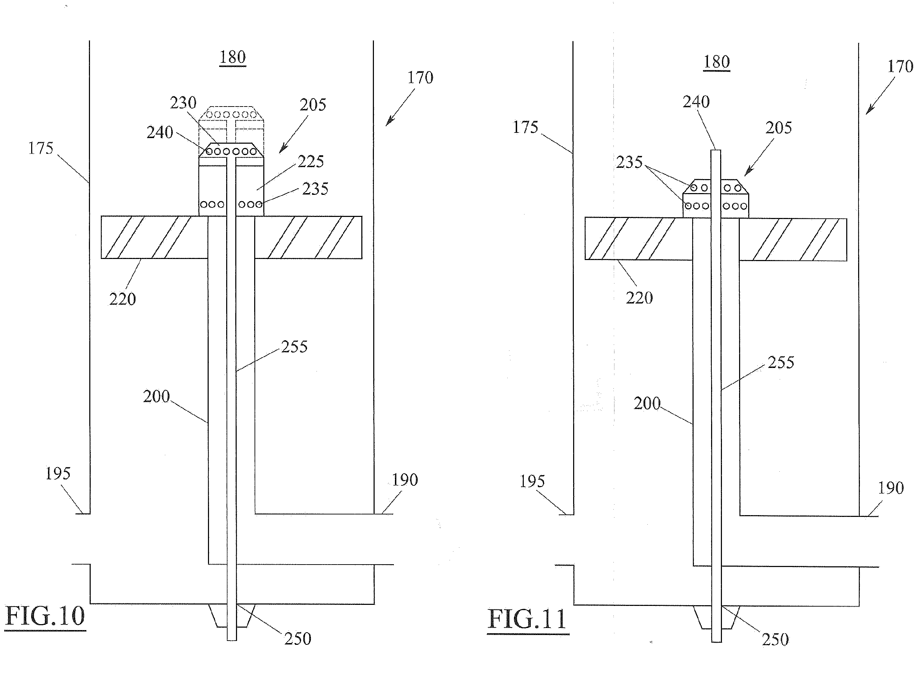

With reference to Figure 10, the delivery head 205 may be for example internally subdivided into two separate volumes, of which a first volume 225 in communication with the sleeve 200 so as to receive gas, and a second volume 230 in communication with the second end of the conveying tube 255 so as to receive hydrogen.

The delivery head 205 may further comprise one or more orifices 235 in communication with the first volume 225 for the escape of the gas, as well as one or more orifices 240 in communication with the second volume 230 for the escape of the hydrogen. Preferably, the orifices 240 for the escape of the hydrogen are placed in a position that is more advanced than the orifices 235 for the escape of the gas, along the direction of the axis of the flame tube 175, that is, of the sleeve 200 and/or of the conveying tube 255, and than the outflow direction of the respective fluids.

In other words, the orifices 240 for the escape of the hydrogen are preferably closer (albeit slightly closer) to the open end of the flame tube 175 than the orifices 235 for the escape of the gas.

In the embodiment of Figure 11, the conveying tube 255 instead substantially passes through the delivery head 205, leading its second end to flow directly outward.

In this case, therefore, the delivery head 205 comprises only a plurality of orifices 235 for the escape of the gas, while the second end of the conveying tube 255 itself defines an orifice 240 for the escape of the hydrogen.

Eventually, to improve the escape of the hydrogen in this second embodiment, the conveying tube 255 may also have one or more additional orifices 240 (not illustrated) obtained in its side wall, for example near the second end.

Also in this case, the orifices 240 are in any case preferably placed in a position slightly more advanced than the orifices 235, along the direction of the flame tube 175 and/or of the axis of the sleeve 200 and/or of the conveying tube 255, that is, they are closer to the open end of the combustion chamber 180 or equivalently of the flame tube 175. Regardless of the embodiment used the hydrogen coming from the third inlet 250 is forced to follow the conveying tube 255, remaining constantly separated from the gas and air and mixing with the latter only within the combustion chamber 180.

In this context, a preferred aspect of the invention provides that the distance between the orifices 235 of the gas and the orifices 240 of the hydrogen is adjustable along the direction of the axis of the flame tube 175, i.e. of the sleeve 200 and/or of the conveying tube 255, so as to approach and/or move the hydrogen escape zone away from the gas escape zone.

Fluid dynamics simulations have in fact shown that this distance significantly influences the amount of NOx that is produced as a result of the combustion of the gas, as well as other boundary conditions, including primarily gas, air and hydrogen flow rates.

Thus, adjusting the distance between the orifices 235 and 240 advantageously allows the burner 170 to be used with different gas, air and hydrogen flow rates, without significantly increasing the polluting emissions of the burner 170.

Depending on the other boundary conditions, this adjustment also allows to maintain the point of ignition of the hydrogen combustion, which notoriously develops very high temperatures, at a safe distance from other components of the burner 170 that could be damaged.

For example, if a maximum of 20% hydrogen is required to have a certain thermal potential of the burner 170, the distance between the orifices 235 and 240 can be adjusted to about 30 mm.

If, on the other hand, the sizing of the system involves the use of higher percentages of hydrogen, then the distance between the orifices 235 and 240 can be modified appropriately, for example increased.

To operate this adjustment, an embodiment (like the one illustrated in Figure 10), may simply provide for replacing the delivery head 205 with another delivery head 205 whose orifices 235 and 240 are at different reciprocal distances from those of the previous delivery head 205 (shown in a dashed line). In other words, it is possible to arrange a plurality of delivery heads 205 that are structurally similar to each other but having different distances between the orifices 235 and 240, for example between 2 and 6 cm, which can be mounted from time to time in the burner.

Another embodiment (like the one of Figure 11) may instead provide for the possibility that the conveying tube 255 is slidable with respect to the delivery head 205.

In this way, by letting the conveying tube 255 slide with respect to the delivery head 205 it is possible to vary the length of its protruding section and thus the distance between the orifices 235 and 240.

This sliding can be driven by appropriate manual and/or motorised moving members (e.g. linear actuator) that can be associated with the conveying tube 255.

In this way it is advantageously possible to obtain a continuous adjustment of the distance between the orifices 235 and 240, which is possibly "dynamic" during the operation of the burner 170, depending on the flow rate conditions of the gases being used. Obviously, it is not excluded that the same adjustment can be achieved by replacing the conveying tube 255 with a longer or shorter one depending on the need.

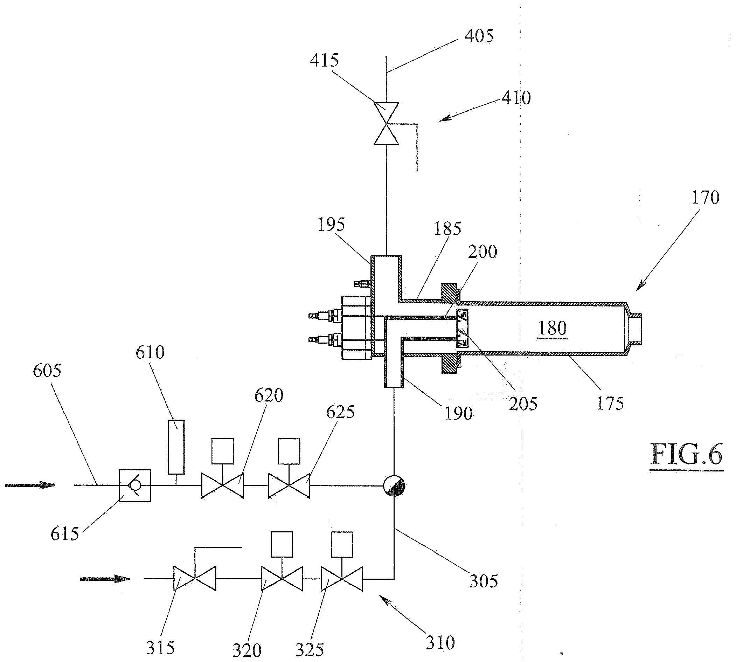

A second embodiment, illustrated in Figure 6, provides otherwise that each delivery duct 605 can be engaged and flow directly into the supply duct 305 that supplies the gas to the respective burner 170.

For example, each delivery duct 605 may flow into a portion of the respective supply duct 305, which is located downstream of the valve group 310 with respect to the direction of normal outflow of the gas towards the burner 170.

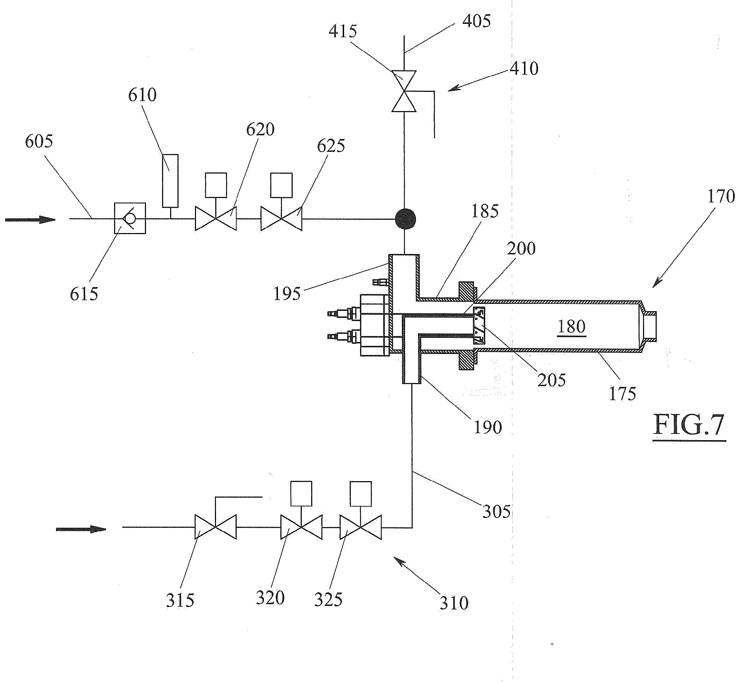

A third embodiment, illustrated in Figure 7, still provides differently that each delivery duct 605 may be engaged and flow directly into the supply duct 405 that supplies air to the respective burner 170.

For example, each delivery duct 605 may flow into a section of the respective supply duct 405, which is located downstream of the valve group 410 with respect to the direction of normal outflow of the air towards the burner 170.

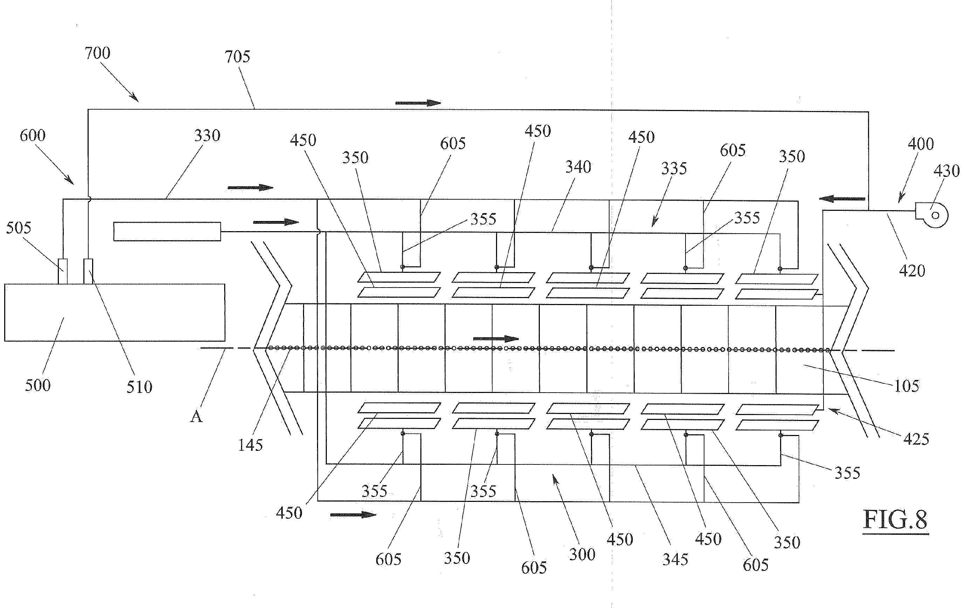

As illustrated in Figure 8, as an alternative to what has just been described, the delivery ducts 605 of the conveying system 600 could be fewer in number than the number of burners 170, and each of them could be adapted to supply hydrogen to only one respective manifold 350.

For example, each delivery duct 605 may be engaged and flow directly into the branch duct 355 that connects the corresponding manifold 350 with the respective secondary duct 340 or 345.

In this way, each delivery duct 605 may be able to supply hydrogen to a greater number of burners 170.

Again, however, each delivery duct 605 preferably remains distinct and separate from the delivery ducts 605 of all the other manifolds 350.

In other words, each manifold 350 may be connected to a single delivery duct 605 of the conveying system 600, such that the hydrogen flowing within this delivery duct 605 may only reach the corresponding manifold 350 and no other.

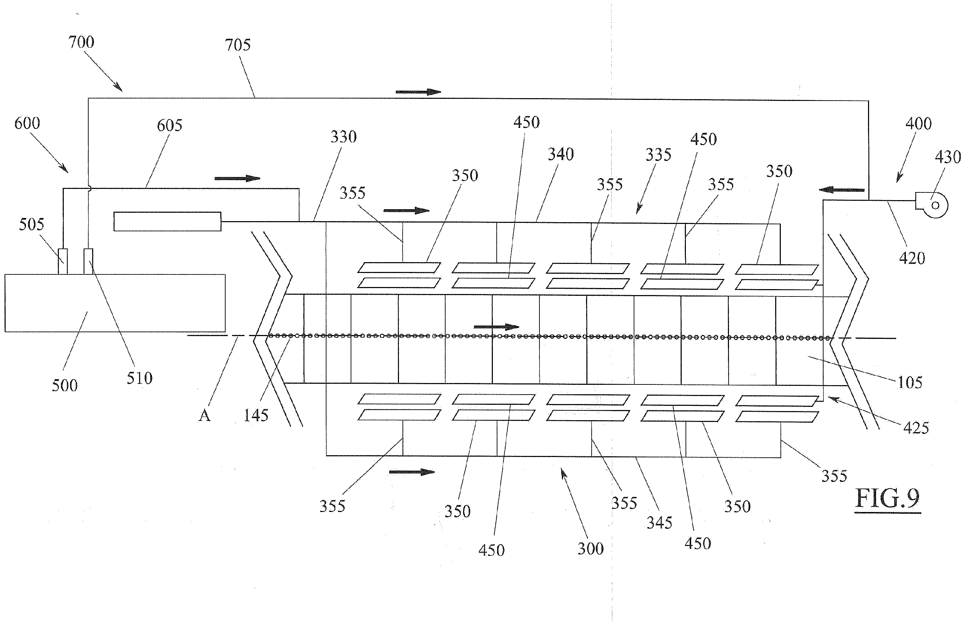

According to another possible embodiment, illustrated in Figure 9, the hydrogen conveying system 600 could comprise a single delivery duct 605, which is adapted to connect the first outlet 505 of the hydrogen generator 500 with the primary duct 330 of the gas conveying system 300.

Regardless of all these considerations, the kiln 100 can finally comprise a conveying system 700 adapted to convey the oxygen (O₂) possibly obtained from the hydrogen generator 500 within the combustion chambers 180 of the burners 170.

One mode to achieve this effect generally provides that the oxygen conveying system 700 may be connected with the air conveying system 400, so as to increase the oxygen content of the latter, before the same is introduced into the burners 170 through the second inlets 195.

As illustrated in the figures, the conveying system 700 may comprise a single delivery duct 705 adapted to connect the second outlet 510 of the hydrogen generator 500 with the primary duct 420 of the air conveying system 400.

Alternatively, however, the conveying system 700 could comprise a plurality of delivery ducts 705, each of which could be connected with the second outlet 510 of the hydrogen generator 505 through an appropriate distribution network, and could flow directly into the supply duct 405 of a respective burner 170.

Or, each delivery duct 705 could be connected with a respective manifold 450.

In any case, the operation of the kiln 100 is substantially the same and is described below.

When the kiln 100 is started, the burners 170 are ignited, supplying gas and air into the combustion chamber 180 and generating, through the ignition spark plug 210, the electric arc that triggers the combustion giving rise to the flame.

Once the combustion has been triggered and the temperature of the combustion chamber 180 has been raised in this way, the hydrogen supply can begin, as well.

By coming into contact with the flame already present in the combustion chamber 180, the hydrogen is also burnt (the molecular hydrogen H₂ has a self-ignition temperature of the order of 570°C), propagating the flame and increasing the heat produced.

Thus, for the same amount of heat produced by the burners 170, the kiln 100 is effectively able to consume a lower amount of gas than traditional kilns, reducing operating costs as well as polluting emissions, particularly CO₂ emissions.

In fact, unlike gas fuels based on hydrocarbons, the combustion of hydrogen produces only water:

*H₂* + ½*O₂ → H₂O*

In addition, the combustion of hydrogen "consumes" a high amount of oxygen which, consequently, cannot be combined with the nitrogen contained in the air, simultaneously also reducing the formation of nitrogen oxides NOₓ.

The formation of nitrogen oxides NOₓ can also be further reduced by appropriately adjusting, for example based on the gas, air and hydrogen flow rates, the distance between the orifices 235 and 240 of the burners 170.

The amount of hydrogen supplied to each burner 170 may be advantageously monitored through the flowmeters 610.

Should a burner 170 be switched off due to unexpected causes, the lack of flame would be sensed by the detection spark plug 215, which would cause the safety solenoid valves 320 and/or 325 to close immediately, interrupting the gas supply, as well as the safety solenoid valves 620 and/or 625 to close, interrupting the hydrogen supply. Under normal conditions, the operation of the kiln 100 can advantageously be managed by a suitable electronic control unit (not illustrated), which can be connected with the ignition spark plug 210 and/or with the detection spark plug 215 and/or with the flowmeters 610, as well as possibly with sensors of other operating parameters of the kiln 100, including in particular one or more thermometers for measuring the internal temperature.

Based on the measurement of the internal temperature, this electronic control unit can be configured to adjust the gas supply to the single burners 170, for example by acting on appropriate control solenoid valves (not shown) that can be placed on the supply ducts 305 of each burner 170, for example upstream of the respective valve group 310, or on the branch ducts 355 of each manifold 350 (or gas ring).

Based on the measurements made by the flowmeters 610 and/or other quantities, the electronic control unit can be configured to adjust the hydrogen inflow, for example by acting on the operating parameters of the hydrogen generator 500 (e.g., by increasing or decreasing the electrical current supplied in the electrolysis process).

The electronic control unit can finally be configured to also adjust the air inflow, for example by acting on the speed and/or other operating parameters of the fan 430.

In some embodiments, the electronic control unit may also be configured to adjust the distance between the orifices 235 and 240 of the burners, for example by varying the position of the conveying tube 255 with respect to the delivery head 205, for example based on the gas, air, and hydrogen flow rates being supplied.

It should be noted here that, in all the embodiments described above, the hydrogen generator 500 could be replaced with another hydrogen source adapted to provide the hydrogen to the burners, for example by a cylinder for the storage of gas fuel containing hydrogen, which can be periodically filled and/or replaced with another similar cylinder, for example when empty.

Obviously, a person skilled in the art may make several technical-applicative modifications to all that above, without departing from the scope of the invention as hereinbelow claimed.

## Claims

1. A kiln (100) for ceramic products, comprising:
- an outer casing (105) defining a channel (130) which mainly extends along a predetermined length direction (A),
- a plurality of rollers (145) placed inside the channel (130), to define a support plane for ceramic products and to let them advance along said length direction (A), and
- a plurality of burners (170) adapted to heat the inside of the channel (130), wherein each burner (170) comprises:
- a combustion chamber (180) placed in communication with the inside of the channel (130),
- a first inlet (190) for a gas fuel containing hydrocarbons and adapted to be burnt in the combustion chamber (180), and
- a second inlet (195) for an oxidising gas, such as air, adapted to allow the combustion of the gas fuel in the combustion chamber (180),
**characterised in that** the kiln (100) further comprises:
- at least a hydrogen source (500) adapted to supply a gas fuel containing hydrogen, and
- a system (600) for conveying hydrogen adapted to convey said gas fuel containing hydrogen into the combustion chamber (180) of each burner (170) to be burnt.

2. A kiln (100) according to claim 1, wherein said hydrogen source is a hydrogen generator (500) or a storage cylinder.

3. A kiln (100) according to claim 2, wherein said hydrogen generator (500) is adapted to divide water molecules into molecular oxygen and hydrogen, the latter entirely constituting at least in part the aforesaid gas fuel.

4. A kiln (100) according to claim 3, comprising a system (700) for conveying oxygen adapted to convey the oxygen obtained by said hydrogen generator (500) to the second inlet (195) of each burner (170).

5. A kiln (100) according to any one of the preceding claims, wherein each burner (170) comprises a third inlet (250), which is distinct and separate from the first and second inlets (190, 195) and is communicating with the combustion chamber (180), and the hydrogen conveying system (600) comprises a delivery duct (605) for each burner (170), which is distinct and separate from the delivery ducts (605) of all the other burners (170) and is connected with the third inlet (250) of the respective burner (170).

6. A kiln (100) according to claim 5, wherein each burner (170) comprises:
- a tube (175) adapted to delimit the combustion chamber (180) and provided with an open axial end and flowing into the channel (130),
- at least one first orifice (235) placed inside the tube (175) and connected with the first inlet (190) for the escape of the gas fuel into the combustion chamber (180), and
- at least one second orifice (240) placed inside the tube (175) and connected with the third inlet (250) for the escape of the hydrogen into the combustion chamber (180).

7. A kiln (100) according to claim 6, wherein said first orifice (235) is further away from the open end of the tube (175) than said second orifice (240), along a direction parallel to the axis of the tube (175).

8. A kiln (100) according to claim 6 or 7, wherein the distance between said first orifice (235) and said second orifice (240), along a direction parallel to the axis of the tube (175), is adjustable.

9. A kiln (100) according to claim 8, wherein said first orifice (235) and said second orifice (240) are made in a delivery head (205) that is replaceable with one or more other delivery heads (205) having the first and second orifices at different distances.

10. A kiln (100) according to claim 9, wherein said first orifice (235) is made in a delivery head (205) and wherein said second orifice (240) is made in a conveying tube (255) slidably associated with the delivery head (205).

11. A kiln (100) according to any one of claims 1 to 4, wherein the first inlet (190) of each burner (170) is linked to a supply duct (305) of the gas fuel, which is distinct and separate from the supply ducts (305) of the gas combustible of all the other burners (170), and wherein the hydrogen conveying system (600) comprises a delivery duct (605) for each burner (170), which is distinct and separate from the delivery ducts (605) of all the other burners (170) and flows into the supply duct (305) of the gas fuel of the corresponding burner (170).

12. A kiln (100) according to claim 11, wherein each supply duct (305) of the gas fuel is provided with at least a valve (310) and wherein each delivery duct (605) flows into the corresponding supply duct (305) of the gas fuel downstream of said valve (310), relative to the outflow direction of the gas fuel towards the burner (170).

13. A kiln (100) according to any one of claims 1 to 4, wherein the second inlet (195) of each burner (170) is linked to a supply duct (405) of the oxidising gas, which is distinct and separate from the supply ducts (405) of the oxidising gas of all the other burners (170), and wherein the hydrogen conveying system (600) comprises a delivery duct (605) for each burner (170), which is distinct and separate from the delivery ducts (605) of all the other burners (170) and flows into the supply duct (405) of the oxidising gas of the corresponding burner (170).

14. A kiln (100) according to claim 13, wherein each supply duct (405) of the oxidising gas is provided with at least a valve (410) and wherein each delivery duct (605) flows into the corresponding supply duct (405) of the oxidising gas downstream of said valve (410), relative to the outflow direction of the oxidising gas towards the burner (170).

15. A kiln (100) according to any one of claims 1 to 4, wherein the hydrogen conveying system (600) comprises at least a delivery duct (605) flowing into a supply duct (330, 355) of the gas fuel, which is linked to the first inlet (190) of two or more burners (170) through a distribution network (335, 350).

16. A kiln (100) according to any one of claims 5, 11, 13 and 15, wherein each delivery duct (605) is provided with a flowmeter (610) and/or a valve (615, 620, 625).
